# EUROPEAN PATENT APPLICATION

(11) **EP 4 369 441 A1**
(43) Date of publication of application: **15.05.2024**
(21) Application number: 21948873.1
(22) Date of filing: 09.07.2021
(51) Int. Cl.: H01M 4/62, H01M 4/64, H01M 4/38

(54) **NEGATIVE ELECTRODE PLATE, AND ELECTROCHEMICAL DEVICE AND ELECTRONIC DEVICE EACH COMPRISING SAME**

(71) Applicant: Ningde Amperex Technology Limited, Zhangwan Town, Jiaocheng District Ningde City Fujian 352100 (CN)
(72) Inventor: LIN, Xiaoping, Ningde City, Fujian 352100 (CN); CHEN, Maohua, Ningde, Fujian (CN); XIE, Yuansen, Ningde City, Fujian 352100 (CN)
(74) Representative: Icosa
(86) International application number: PCT/CN2021/105515
(87) International publication number: WO 2023/279379

(57) **Abstract**

This application relates to a negative electrode plate, and an electrochemical apparatus and electronic apparatus containing the same. This application provides a negative electrode plate including a negative electrode current collector and a porous layer. The porous layer is located on the negative electrode current collector, and the porous layer includes a three-dimensional skeleton containing electrically insulating fibers. The three-dimensional skeleton can be configured to accommodate lithium metal deposition. A negative electrode of this application is provided with a porous layer containing a three-dimensional skeleton and the three-dimensional skeleton adopts an electrically insulating material. This can effectively alleviate lithium metal deposition on a surface of the negative electrode during charge-discharge cycles of an electrochemical apparatus, inhibit volume swelling of lithium metal, and retard the growth of lithium dendrites, thereby improving the cycling performance, capacity performance, and safety performance of the electrochemical apparatus.

## Description

### TECHNICAL FIELD

This application relates to the energy storage field, and in particular to a negative electrode plate with a three-dimensional skeleton structure, and an electrochemical apparatus and electronic apparatus containing the same, particularly a lithium-ion battery.

### BACKGROUND

With the development of technologies and increasing demands for mobile apparatuses, requirements for electrochemical apparatuses (for example, lithium-ion batteries) are dramatically increased. Lithium metal is one of existing metals with the highest mass-energy ratio. When a lithium-ion battery uses lithium metal as a negative electrode material, the energy density and operating voltage of an electrochemical apparatus can be greatly improved.

During practical use of an electrochemical apparatus, directly using lithium metal as the negative electrode material will cause at least the following problems. (1) Side reactions tend to take place between lithium metal and substances in an electrolyte, consuming the electrolyte and fresh lithium metal and thereby reducing the coulombic efficiency. (2) During charging and discharging, uneven surface potential distribution of lithium metal and uneven concentration distribution of lithium ions in the electrolyte result in uneven deposition and dissolution of lithium metal, forming "lithium dendrites" and "dead lithium". The lithium dendrites and dead lithium will further reduce the battery capacity. In severe cases, lithium dendrites may pierce the separator, resulting in short circuit of the battery and safety risks. (3) With repeated charging and discharging of the battery, lithium metal deposition causes constant volume swelling and shrinkage, damaging the electrode structure. In severe cases, this strips off an interface between the negative electrode plate and an inorganic protective coating with poor flexibility, leaving the electrode plate unprotected.

In view of this, it is necessary to study and improve electrode plates so as to enhance safety in use of the electrochemical apparatuses and electronic apparatuses containing such electrode plates.

### SUMMARY

Some embodiments of this application provide an electrode plate for improving the safety of an electrode assembly, and an electrochemical apparatus containing the same, so as to resolve at least one problem existing in the related field to at least some extent.

According to one aspect, this application provides a negative electrode plate including a negative electrode current collector and a porous layer. The porous layer is located on the negative electrode current collector, and the porous layer includes a three-dimensional skeleton containing electrically insulating fibers. The three-dimensional skeleton can be configured to accommodate lithium metal deposition.

According to another aspect, this application provides an electrochemical apparatus including the positive electrode in the foregoing embodiment.

A negative electrode of this application is provided with a porous layer containing a three-dimensional skeleton and the three-dimensional skeleton adopts electrically insulating fibers. This can effectively alleviate lithium metal deposition on a surface of the negative electrode during charge-discharge cycles of an electrochemical apparatus, inhibit volume swelling of lithium metal, and retard the growth of lithium dendrites, thereby improving the cycling performance, capacity performance, and safety performance of the electrochemical apparatus. When the electrochemical apparatus of this application is being charged, the three-dimensional skeleton containing electrically insulating fibers can prevent electrons from being transported from the negative electrode current collector side to a surface of the porous layer. This controls the direction and position of lithium metal deposition, further alleviating volume swelling and improving the cycling stability of the electrode plate.

According to another aspect of this application, this application provides an electronic apparatus including the foregoing electrochemical apparatus.

Additional aspects and advantages of some embodiments of this application are partially described and presented subsequently, or explained by implementation of some embodiments of this application.

### BRIEF DESCRIPTION OF DRAWINGS

To describe some embodiments of this application, the following briefly describes the accompanying drawings required for describing these embodiments of this application or the prior art. Apparently, the accompanying drawings described below are merely some embodiments of this application. Persons skilled in the art may still derive drawings for other embodiments from structures shown in these accompanying drawings without creative efforts.
FIG. 1 is a schematic diagram of a structure of a negative electrode according to some embodiments of this application.
FIG. 2 is a schematic diagram of a cross-sectional structure of a negative electrode according to some embodiments of this application.
FIG. 3 is a scanning electron microscope (SEM) image of a top surface of a three-dimensional skeleton according to some embodiments of this application.
FIG. 4 is a scanning electron microscope image of lithium metal deposition in a porous layer according to some embodiments of this application.
FIG. 5 is a schematic structural diagram of a fiber with a hollow structure according to some embodiments of this application.
FIG. 6 is a molecular structure diagram of a β phase of polyvinylidene fluoride.
FIG. 7 is a schematic diagram of a structure of a negative electrode according to some other embodiments of this application.

### DESCRIPTION OF EMBODIMENTS

Embodiments of this application are described in detail below. The embodiments of this application should not be construed as a limitation on this application.

Unless otherwise expressly indicated, the following terms used in this specification have the meanings described below.

The terms "about", "roughly", "substantially", and "approximately" used herein are intended to describe and represent small variations. When used in combination with an event or a circumstance, the term may refer to an example in which the exact event or circumstance occurs or an example in which an extremely similar event or circumstance occurs. For example, when used in combination with a value, the term may refer to a variation range of less than or equal to ±10% of the value, for example, less than or equal to ±5%, less than or equal to ±4%, less than or equal to ±3%, less than or equal to ±2%, less than or equal to ±1%, less than or equal to ±0.5%, less than or equal to ±0.1%, or less than or equal to ±0.05%. For example, if a difference between two numerical values is less than or equal to ±10% of an average numerical value of the numerical values (for example, less than or equal to ±5%, less than or equal to ±4%, less than or equal to ±3%, less than or equal to ±2%, less than or equal to ±1%, less than or equal to ±0.5%, less than or equal to ±0.1%, or less than or equal to ±0.05%), the two numerical values may be considered "roughly" the same.

In the specific embodiments and claims, an item list connected by the terms "at least one of", "at least one piece of", "at least one kind of" or other similar terms may mean any combination of the listed items. For example, if items A and B are listed, the phrase "at least one of A or B" means only A; only B; or A and B. In another example, if items A, B, and C are listed, the phrase "at least one of A, B, or C" means only A; only B; only C; A and B (exclusive of C); A and C (exclusive of B); B and C (exclusive of A); or all of A, B, and C. The item A may include a single component or a plurality of components. The item B may include a single element or a plurality of elements. The item C may include a single element or a plurality of elements.

In addition, for ease of description, "first", "second", "third", and the like may be used to distinguish between different components in one drawing or a series of drawings in this specification. Unless otherwise specified or limited, "first", "second", "third", and the like are not intended to describe corresponding components.

Lithium metal is a metal with the smallest relative atomic mass (6.94) and the lowest standard electrode potential (-3.045 V) among all metal elements, and its theoretical specific capacity is as high as 3860 mAh/g. Theoretically, the operating voltage and capacity of an electrochemical apparatus can be increased by using lithium metal as a negative electrode active material. However, existing lithium-ion batteries mainly have the following problems. For commonly used negative electrode materials of lithium-ion batteries, for example, graphite, lithium ions are intercalated into a graphite layer structure during charging, and the graphite layer has a porous structure to provide storage space for lithium metal. However, a pure lithium metal electrode does not have such porous structure, and therefore leads to a dramatic volume change during charging and discharging, causing a series of problems and affecting the cycling performance and the like of the battery. In addition, due to uneven current density and uneven concentration of lithium ions in the electrolyte, deposition will be excessively fast at certain sites, thereby forming sharp dendritic structures. Lithium dendrites will significantly reduce the deposition density, thereby reducing the energy density. At present, in some lithium metal batteries, an actual deposition density of lithium metal is approximately 0.2 g/cc, which is far lower than the true density 0.534 g/cc of lithium metal. Due to sparse deposition of lithium metal, the energy density will be reduced by more than 100 Wh/L. Furthermore, lithium dendrites may pierce the separator and cause short circuit, resulting in safety problems.

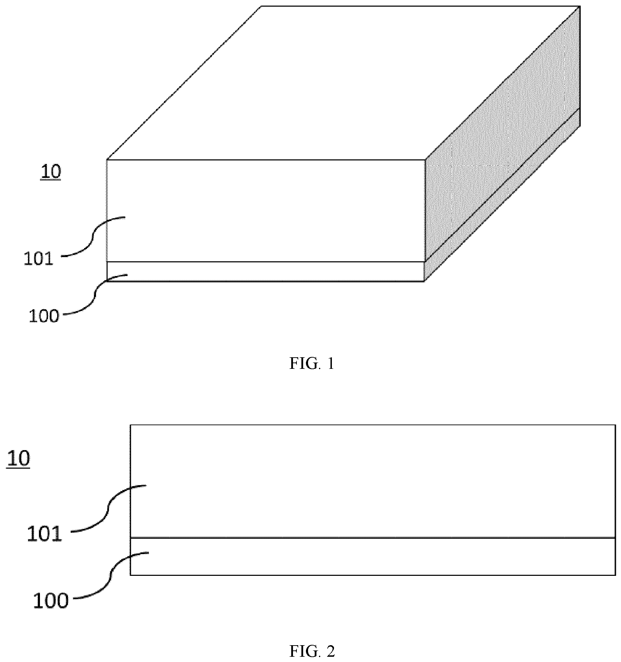

FIG. 1 and FIG. 2 are a schematic diagram and a schematic cross-sectional diagram of a negative electrode according to some embodiments of this application.

According to one aspect of this application, as shown in FIG. 1 and FIG. 2, an embodiment of this application provides a negative electrode 10, in which a porous layer 101 containing a three-dimensional skeleton is provided on a surface of a negative electrode current collector 100 to accommodate lithium metal. This ensure that lithium metal can be stored in the three-dimensional skeleton of the porous layer on the surface of the current collector during charging and discharging of a battery, thereby inhibiting volume swelling. In addition, the three-dimensional skeleton can improve the deposition morphology of lithium metal and inhibit the formation of lithium dendrites. In some embodiments, the porous layer 101 is entirely formed by three-dimensional skeletons.

In some embodiments, a material of the three-dimensional skeleton in the porous layer 101 includes electrically insulating fibers. The electrically insulating fibers can prevent electrons from migrating from the surface of the negative electrode current collector to an outer surface of the porous layer, thereby inducing gradual deposition of lithium metal from the surface of the negative electrode current collector to the inside of the porous layer. This further alleviates volume swelling of the negative electrode and inhibits the growth of lithium dendrites, thereby improving the cycling performance of the electrochemical apparatus. In some embodiments, the three-dimensional skeleton is entirely formed by electrically insulating fibers.

It should be understood by those skilled in the art that the term "electrically insulating" used herein does not mean being totally unable to conduct electrons but means an extremely low electrical conductivity (electrical conductivity). In some embodiments, the electrical conductivity of the electrically insulating fibers contained in the three-dimensional skeleton is lower than 10⁻¹⁰ S/cm.

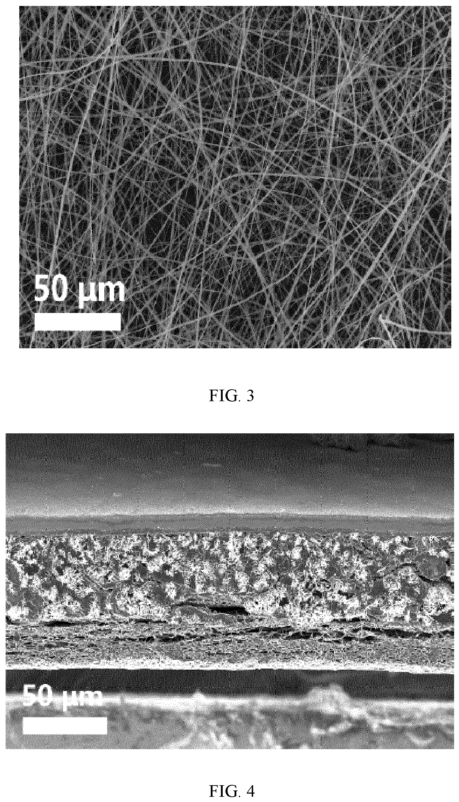

FIG. 3 and FIG. 4 respectively show scanning electron microscope images of a top surface of a three-dimensional skeleton and lithium metal deposition in a porous layer according to some embodiments of this application. As shown in FIG. 3 and FIG. 4, electrons in the three-dimensional skeleton in the porous layer are controlled to be not conducted. This can help control the direction of lithium metal deposition and allows lithium metal to be fully deposited inside the porous layer, thereby alleviating swelling of the negative electrode plate and improving the cycling stability.

In some embodiments, the electrically insulating fibers may include strip fibers, sphere fibers, and block fibers in terms of structure. In some embodiments, the fibers are of a strip fiber structure, where the three-dimensional skeleton is constructed from a plurality of single-stranded strip fibers and strip fibers. The strip fiber material can better help construct the three-dimensional skeleton into a self-supporting structure.

In some embodiments, the fiber has a diameter of 50 nm to 10 µm. In some other embodiments, the diameter of a single-stranded fiber is, for example, approximately 50 nm, 100 nm, 200 nm, 300 nm, 400 nm, 500 nm, 700 nm, 1µm, 2µm, 5µm, 10 µm, or within a range defined by any two of these values. In some embodiments, the single-stranded fiber has a diameter of 200 nm to 2 µm.

In some embodiments, the porous layer has a porosity of greater than or equal to 70% or 80%. In some other embodiments, the porous layer has a porosity of 70% to 90%, to ensure that the porous layer has sufficient space for accommodating lithium metal deposition and maintaining certain structural strength and stability.

In some embodiments, the porous layer contains pores formed by interweaving fibers in the three-dimensional skeleton, and the pores are formed between fibers. In some embodiments, the fibers in the three-dimensional skeleton interweave to form pores, and the pore has a size approximately ranging from 100 nm to 10 µm. In some other embodiments, the size of the pore formed by interweaving fibers in the three-dimensional skeleton is, for example, approximately 100 nm, 200 nm, 500 nm, 1 µm, 2 µm, 5 µm, 10 µm, or within a range defined by any two of these values. In some embodiments, the pores formed by interweaving strip fibers have a more consistent range of pore distribution and a more stable pore structure. This can improve the pattern of lithium metal deposition and inhibit the formation of irregular lithium dendrites. In some embodiments, the pores formed by interweaving fibers in the three-dimensional skeleton have a size ranging from 500 nm to 5 µm.

In addition to the form structure, fibers can also be defined by their own pore structures, which may include a solid structure, a hollow structure, or both of them. The solid structure means that a fiber does not have any pores, and the hollow structure means that a fiber has its own pore structure. In some embodiments, a fiber in the three-dimensional skeleton has a hollow structure and the fiber contained in the porous layer has a pore, and the pore is formed inside the fiber. In some embodiments, the hollow structure has a pore size of 10 nm to 500 nm. In some other embodiments, the pore size of the hollow structure is, for example, approximately 10 nm, 50 nm, 200 nm, 500 nm, or within a range defined by any two of these values.

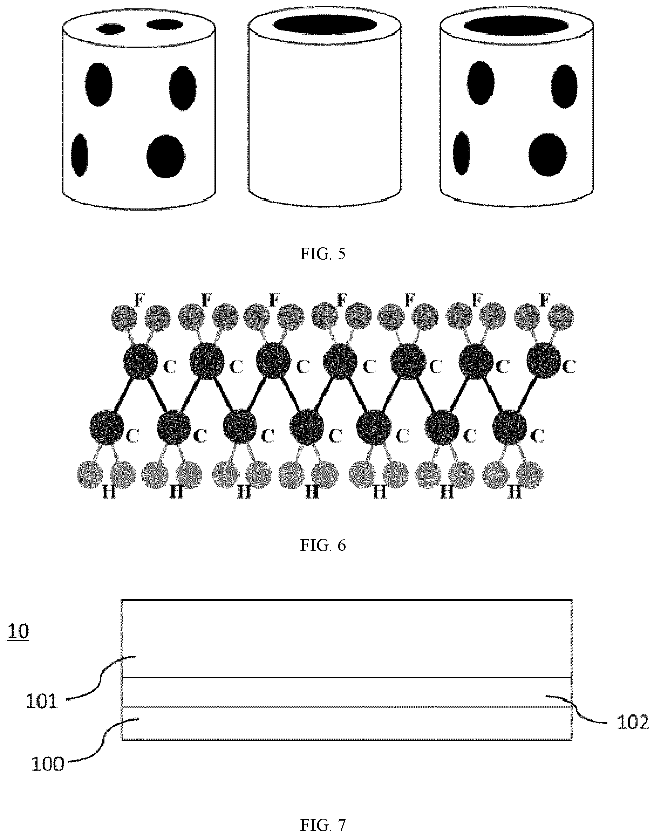

FIG. 5 is a schematic structural diagram of a fiber with a hollow structure according to some embodiments of this application.

In some embodiments, as shown in FIG. 5, the fiber with a hollow structure may have three types of pore structure, including an empty structure, an on-wall porous structure, or an empty and on-wall porous structure. In some embodiments, with the empty structure, the fiber has a fiber wall thickness of 50 nm to 4.5 µm. In some embodiments, when the fiber is of the on-wall porous structure, the on-wall porous structure has a pore size of 50 nm to 500 nm. When the fibers have a hollow structure, including the empty structure or on-wall porous structure, the transmission rate of electrolyte can be increased in the three-dimensional skeleton. In addition, the hollow structure design can further reduce the structural weight of the three-dimensional skeleton, raise the surface utilization rate of lithium metal in the three-dimensional skeleton, and help increase the overall energy density of the electrochemical apparatus.

In some embodiments, the fibers include ion conducting fibers, where lithium ions can be bonded with some active groups on surfaces of the ion conducting fibers to form an associated complex. With the movement of fiber surfaces, active sites for association of lithium ions can constantly move and convert, thereby transporting lithium ions and further improving the lithium ion transport efficiency in the porous layer.

In some embodiments, a material of the fibers includes one or more of a polymer material and an inorganic material, where the polymer material includes one or more of the following constituents and derivatives thereof: polyvinylidene fluoride, polyimide, polyamide, polyacrylonitrile, polyethylene glycol, polyphenylene oxide, polypropylene carbonate, polymethyl methacrylate, polyethylene glycol terephthalate, polyethylene oxide, polyvinylidene fluoride-hexafluoropropylene, or polyvinylidene fluoride-chlorotrifluoroethylene, and the inorganic material includes but is not limited to one or more of the following constituents and derivatives thereof: sodium silicate, aluminum oxide, or silicon oxide.

In some embodiments, the fiber includes a piezoelectric material. The term "piezoelectric material" used herein refers to a material, which is an electrical insulator under atmospheric pressure but allows current to pass under pressure within a certain range due to change of its internal structure. A piezoelectric material may have a dielectric constant higher than 100, and one surface thereof is positively charged and another surface is negatively charged when pressure within a certain range is applied to stretch or compress the material. As a result, when the negative electrode is being charged, the three-dimensional skeleton further swells and stretches due to lithium metal deposition in the porous layer. The fibers made of a piezoelectric material can create a potential difference between two surfaces of lithium-ion metal deposition regions in the porous layer. This improves the electrical conductivity of the three-dimensional skeleton between the lithium-ion metal deposition regions, improves the electric cycling effects of the negative electrode, and optimizes the density and direction of lithium metal deposition. In some embodiments, the piezoelectric material includes but is not limited to one or more of BaTiO₃, Pb(Zr, Ti)O₃(PZT), Pb₁₋ₓLaₓZr_{1-y}Ti_{y}O₃(PLZT), PB(Mg₃Nb_{2/3})O₃-PbTiO₃(PMN-PT), or hafnium dioxide (HfO2).

In some embodiments, the fiber includes a fluoropolymer with a β phase. The term "β phase" used herein refers to a thermodynamically stable phase in a crystalline phase stacking structure of a polymer material. For example, when polyvinylidene fluoride is used as the fiber for the three-dimensional skeleton, polyvinylidene fluoride has a total of five crystalline phases, α, β, γ, δ, and ε, where α, β, and γ phases are common, the α phase is a kinetically controlled phase, and the β phase is a thermodynamically stable phase. As shown in FIG. 6, H-F-C atoms in the β phase of a fluoropolymer fiber (for example, but not limited to, polyvinylidene fluoride) exhibit an orderly folding arrangement, causing dipole moments to point to a same direction. Compared with other phases, monomer units of the β phase have the highest dipole moment, and therefore the β phase has better piezoelectricity, thermoelectricity, and ferroelectricity. In this application, the β phase of the fluoropolymer fiber can be effectively increased through improvement in the preparation process, and the β-phase fluoropolymer fiber is added to the fibers for the three-dimensional skeleton to optimize the stacking structure of the polymer material in the fiber for a good piezoelectricity, thereby alleviating lithium metal deposition.

In this application, the stacking structure for the fibers used in the three-dimensional skeleton can be tested by using Fourier transform infrared spectroscopy (FTIR), so as to determine the crystalline phase of the stacking structure of the polymer material in the fibers.

In some embodiments, a maximum deposition amount M of lithium metal in per unit volume of the three-dimensional skeleton of this application is expressed by the following equation: M = T/4.85 (mAh/cm³), where T is a thickness of the three-dimensional skeleton. In some embodiments, a deposition density of lithium metal in the three-dimensional skeleton may reach 0.534 g/cm³.

In some embodiments, the porous layer has a thickness of 30 µm to 500 µm. In some other embodiments, the thickness of the porous layer is, for example, approximately 30 µm, 40 µm, 50 µm, 60 µm, 70 µm, 80 µm, 90 µm, 100 µm, 200 µm, 250 µm, 300 µm, 400 µm, 500 µm, or within a range defined by any two of these values. In some embodiments, the porous layer has a thickness of 300 µm to 500 µm. A stable pore utilization rate can be provided depending on the thickness of the porous layer, so that the deposition amount of lithium metal in the electrochemical apparatus is increased, thereby providing an electrochemical apparatus with a high capacity.

In some embodiments, the porous layer in the negative electrode may be treated with pre-lithiation to improve the lithium capacity and cycling performance of the electrochemical apparatus. The pre-lithiation treatment may be performed using one or more of the following processes: cold pressing, hot pressing, electrochemical lithiation, or physical vapor deposition (PVD). In some embodiments, the lithium metal in the negative electrode treated with pre-lithiation can be provided inside the porous layer or between the porous layer and the negative electrode current collector.

FIG. 7 is a schematic diagram of a structure of a negative electrode according to some other embodiments of this application.

As shown in FIG. 7, in some embodiments, the negative electrode 10 may further include lithium metal 102, where the lithium metal is provided between the porous layer and the negative electrode current collector as supplemental lithium metal, to increase the energy density of the electrochemical apparatus. In some embodiments, the lithium metal has a thickness equal to or less than 50 µm. In some embodiments, the lithium metal has a thickness equal to or less than 30 µm, to provide the electrochemical apparatus with an optimal energy density.

In some embodiments, the negative electrode current collector may be copper foil or nickel foil. However, the negative electrode current collector may also be made of other materials commonly used in the art, which is not limited herein.

According to another aspect of this application, an embodiment of this application provides a negative electrode preparation method including the following steps. An electrically insulating three-dimensional skeleton is prepared by using an electrospinning technology, and then a porous layer formed by the three-dimensional skeletons is provided on a negative electrode current collector by using a cold pressing process. Finally, the negative electrode is obtained using a cutting process.

In some embodiments of this application, during the preparation process using the electrospinning technology, a precursor solution is further modified by adding acetone to a solvent N,N-dimethylformamide, where a proportion of an amount of the acetone to a total amount of the precursor solution is 10 wt% to 20 wt%, so as to increase the β phase content of a fluoropolymer in fibers for the three-dimensional skeleton. In some embodiments of this application, during the preparation process using the electrospinning technology, the rotational speed of a roller is increased to be between 1500 rpm and 2500 rpm, so as to increase the pulling force of an electric field, as well as the β phase content of a fluoropolymer in fibers for the three-dimensional skeleton. In some embodiments of this application, during the preparation process using the electrospinning technology, a distance between a connector plate and a needle head is increased to a range of 15 cm to 20 cm. This can increase the solvent evaporation rate and further increase the β phase content.

According to another aspect of this application, an embodiment of this application provides an electrochemical apparatus. The electrochemical apparatus includes a positive electrode, a separator, and the negative electrode provided in the foregoing embodiments. In some embodiments, the electrochemical apparatus is a lithium-ion battery.

In some embodiments, in a case that the electrochemical apparatus is fully charged, a thickness t of a lithium metal deposition portion is greater than or equal to at least 30% of a thickness T of the porous layer. It should be understood that the porous layer of the negative electrode in this application may swell or shrink in volume along with lithium metal deposition during the charge-discharge cycling. Therefore, the "thickness T" of the porous layer mentioned herein is the thickness of the porous layer when the electrochemical apparatus is fully charged. In this application, the thickness t of the lithium metal deposition portion is limited to being greater than or equal to at least 30% of the thickness T of the porous layer. This can alleviate volume swelling of the negative electrode or the porous layer in the electrochemical apparatus, thereby improving the cycling performance of a full battery. In addition, the overall energy density of the electrochemical apparatus can be further ensured by increasing the utilization rate of lithium metal deposition in the porous layer.

It should be understood that in the electrochemical apparatus, the thickness T of the porous layer in the negative electrode and the thickness t of the lithium metal deposition portion may be measured using a thickness test method commonly used in the art, which is not limited herein. In some embodiments, the thickness of the porous layer of the negative electrode and the thickness of the lithium metal deposition portion thereof are tested as follows. A positive electrode made of a lithium iron phosphate material and the negative electrode having a porous layer in the foregoing embodiments are used to form an electrochemical apparatus through single-layer stacking. The electrochemical apparatus undergoes many cycles, and the discharge capacity is recorded for each cycle. When the discharge capacity of the electrochemical apparatus drops to 80%, cycling is stopped and the electrochemical apparatus is fully charged. Then, the battery is taken out and immersed in a dimethyl carbonate solution after the negative electrode plate is removed. A sample of the negative electrode plate is prepared using an argon ion polishing CP method, a cross section of the negative electrode plate is observed using a scanning electron microscope, and the thickness T of the porous layer in the negative electrode and the thickness t of the lithium metal deposition portion are recorded. In some embodiments, the electrochemical apparatus is cycled for one or more times as follows. At a constant temperature of 20°C, the electrochemical apparatus is charged to 3.7 V at a constant current of 0.2C, charged to 0.025C at a constant voltage and left standing for five minutes, and then discharged to 2.55 V at a constant current of 0.5C and left standing for five minutes. This is one cycle.

In some embodiments, the positive electrode includes a positive electrode current collector. The positive electrode current collector may be aluminum foil or nickel foil. However, the positive electrode current collector may also be made of other materials commonly used in the art, which is not limited herein.

In some embodiments, the positive electrode includes a positive electrode active material layer. The positive electrode active material layer includes a positive electrode active material capable of absorbing and releasing lithium (Li), which may be sometimes referred to as "a positive electrode active material capable of absorbing/releasing lithium Li" hereinafter. An example of the positive electrode active material capable of absorbing/releasing lithium (Li) may include one or more of lithium cobalt oxide, lithium nickel cobalt manganese oxide, lithium nickel cobalt aluminate, lithium manganate oxide, lithium manganese iron phosphate, lithium vanadium phosphate, lithium vanadyl phosphate, lithium iron phosphate, lithium titanate, or a lithium-rich manganese-based material.

In the foregoing positive electrode active materials, the chemical formula of lithium cobalt oxide may be Li_{y}CoₐM1_{b}O_{2-c}, where M1 is selected from at least one of nickel (Ni), manganese (Mn), magnesium (Mg), aluminum (Al), boron (B), titanium (Ti), vanadium (V), chromium (Cr), iron (Fe), copper (Cu), zinc (Zn), molybdenum (Mo), tin (Sn), calcium (Ca), strontium (Sr), tungsten (W), yttrium (Y), lanthanum (La), zirconium (Zr), or silicon (Si), and values of y, a, b, and c are in the following ranges respectively: 0.8 ≤ y ≤ 1.2, 0.8 ≤ a ≤ 1, 0 ≤ b ≤ 0.2, and -0.1 ≤ c ≤ 0.2.

In the foregoing positive electrode active materials, the chemical formula of lithium nickel cobalt manganese oxide or lithium nickel cobalt aluminate may be Li_{z}Ni_{d}M2ₑO_{2-f}, where M2 is selected from at least one of cobalt (Co), manganese (Mn), magnesium (Mg), aluminum (Al), boron (B), titanium (Ti), vanadium (V), chromium (Cr), iron (Fe), copper (Cu), zinc (Zn), molybdenum (Mo), tin (Sn), calcium (Ca), strontium (Sr), tungsten (W), zirconium (Zr), or silicon (Si), and values of z, d, e, and f are in the following ranges respectively: 0.8 ≤ z ≤ 1.2, 0.3 ≤ d ≤ 0.98, 0.02 ≤ e ≤ 0.7, and -0.1 ≤ f≤ 0.2.

In the foregoing positive electrode active substances, the chemical formula of lithium manganate oxide may be Mn_{2-g}M_{3g}O₄₋ₕ, where M3 is selected from at least one of cobalt (Co), nickel (Ni), magnesium (Mg), aluminum (Al), boron (B), titanium (Ti), vanadium (V), chromium (Cr), iron (Fe), copper (Cu), zinc (Zn), molybdenum (Mo), tin (Sn), calcium (Ca), strontium (Sr), or tungsten (W), and values of u, g, and h are in the following ranges respectively: 0.8 ≤ u ≤ 1.2, 0 ≤ g < 1.0, and -0.2 ≤ h ≤ 0.2.

In the foregoing positive electrode active materials, the chemical formula of lithium iron phosphate is LiFePO₄.

In some embodiments, the positive electrode active material layer may further include at least one of a binder and a conductive agent. It should be understood that persons skilled in the art may select a binder and a conductive agent commonly used in the art based on actual needs, which is not limited herein.

In some embodiments, the separator includes but is not limited to at least one of polyethylene, polypropylene, polyethylene glycol terephthalate, polyimide, or aramid. For example, polyethylene includes at least one constituent selected from high-density polyethylene, low-density polyethylene, and ultra-high-molecular-weight polyethylene. Particularly, polyethylene and polypropylene are effective for preventing short circuit and may improve the stability of the battery depending on shutdown effects. It should be understood that persons skilled in the art may select a separator commonly used in the art based on actual needs, which is not limited herein.

The lithium-ion battery of this application further includes an electrolyte, where the electrolyte includes a lithium salt and a non-aqueous solvent.

In some embodiments, the lithium salt is selected from one or more of LiPF₆, LiBF₄, LiAsF₆, LiClO₄, LiB(C₆H₅)₄, LiCH₃SO₃, LiCF₃SO₃, LiN(SO₂CF₃)₂, LiC(SO₂CF₃)₃, LiSiF₆, LiBOB, or lithium difluoroborate. For example, LiPF₆ is selected as the lithium salt because it can provide high ionic conductivity and improve the cycling performance.

The non-aqueous solvent may be a carbonate compound, a carboxylate compound, an ether compound, another organic solvent, or any combination thereof.

The carbonate compound may be a linear carbonate compound, a cyclic carbonate compound, a fluorocarbonate compound, or any combination thereof.

An example of the another organic solvent is dimethyl sulfoxide, 1,2-dioxolane, sulfolane, methyl sulfolane, 1,3-dimethyl-2-imidazolidinone, N-methyl-2-pyrrolidone, formamide, dimethylformamide, acetonitrile, trimethyl phosphate, triethyl phosphate, trioctyl phosphate, phosphate ester, or any combination thereof.

In some embodiments, the non-aqueous solvent is selected from a group consisting of ethylene carbonate, propylene carbonate, diethyl carbonate, dimethyl carbonate, ethyl methyl carbonate, propylene carbonate, methyl acetate, ethyl propionate, fluoroethylene carbonate, and any combination thereof.

In some embodiments, the non-aqueous solvent is made by mixing dioxolane (DOL) and dimethyl ether (DME) at a volume ratio of 0.5-2.

It should be understood that the methods for preparing a positive electrode, a separator, and an electrolyte according to some embodiments of this application may be selected from any appropriate conventional methods in the art based on specific needs, without departing from the spirit of this application. This is not limited herein. In an embodiment of the method for manufacturing an electrochemical apparatus, the method for preparing a lithium-ion battery includes: winding, folding, or stacking in sequence the negative electrode, separator, and positive electrode in the foregoing embodiments into an electrode assembly, loading the electrode assembly into, for example, an aluminum-plastic film and injecting an electrolyte, and performing processes such as vacuum packaging, standing, formation, and shaping. A lithium-ion battery is obtained.

Although the lithium-ion battery is used as an example in the foregoing description, those skilled in the art can easily realize that a binding layer of this application may be used in other suitable electrochemical apparatuses. Such electrochemical apparatus includes any apparatus in which an electrochemical reaction takes place. Specific examples of the apparatus include all types of primary batteries, secondary batteries, fuel batteries, solar batteries, or capacitors. In particular, the electrochemical apparatus is a lithium secondary battery, including a lithium metal secondary battery, a lithium-ion secondary battery, a lithium polymer secondary battery, or a lithium-ion polymer secondary battery.

Some embodiments of this application further provide an electronic apparatus, where the electronic apparatus includes the electrochemical apparatus according to an embodiment of this application.

The electronic apparatus according to some embodiments of this application is not particularly limited, and may be any known electronic apparatus used in the prior art. In some embodiments, the electronic apparatus may include, but is not limited to, a notebook computer, a pen-input computer, a mobile computer, an electronic book player, a portable telephone, a portable fax machine, a portable copier, a portable printer, a stereo headset, a video recorder, a liquid crystal television, a portable cleaner, a portable CD player, a mini-disc, a transceiver, an electronic notebook, a calculator, a memory card, a portable recorder, a radio, a standby power source, a motor, an automobile, a motorcycle, a motor bicycle, a bicycle, a lighting appliance, a toy, a game console, a clock, an electric tool, a flash lamp, a camera, a large household battery, a lithium-ion capacitor, or the like.

### Specific examples

The following lists some specific examples and comparative examples and describes the lithium metal deposition test, cycling performance test, and cycling thickness swelling rate of the electrochemical apparatuses (lithium-ion batteries), so as to better illustrate the technical solution of this application.

### 1. Test method

### 1.1 Lithium metal deposition test

A lithium-ion battery in the following examples and comparative examples was left standing in a thermostat at 25°C±2°C for two hours, discharged to 3.00 V at a constant current of 0.5C, left standing for five minutes, charged to 4.45 V at a constant current of 0.7C, and then charged to 0.02C at a constant voltage of 4.45 V This was one cycle of lithium metal deposition test. After 10 cycles of such lithium metal deposition test, the fully-charged lithium-ion battery was disassembled and a position of the lithium metal deposition was recorded.

### 1.2 Cycling performance test

A lithium-ion battery formed in the following examples and comparative examples was left standing in a thermostat at 25°C±2°C for two hours, charged to 4.45 V at a constant current of 0.7C, charged to 0.05C at a constant voltage of 4.45 V, left standing for 15 minutes, and then discharged to 3.0 V at a constant current of 0.5C. This was one charge-discharge cycle, and the first-cycle discharge capacity of the lithium-ion battery was recorded. After 200 cycles of charging and discharging as described above, the discharge capacity was recorded.

Ten lithium-ion batteries were tested per group, and an average value was calculated for the capacity retention rates of the lithium-ion batteries. Cycling capacity retention rate of a lithium-ion battery = discharge capacity after 200 cycles (mAh)/discharge capacity after the first cycle (mAh) × 100%.

### 1.3 Cycling thickness swelling rate test

A 600 g plate thickness gauge (ELASTOCON, EV 01) was used to measure the thickness of a lithium-ion battery.

A lithium-ion battery formed in the following examples and comparative examples was placed in a thermostat at 25°C±2°C for two hours, charged to 4.45 V at a constant current of 0.7C, charged to 0.05C at a constant voltage of 4.45 V, and left standing for 15 minutes, and a thickness of the fully charged lithium-ion battery was recorded. Then, the lithium-ion battery was discharged to 3.0 V at a constant current of 0.5C. This was one charge-discharge cycle. A thickness of the lithium-ion battery after the first cycle was recorded. After 200 cycles of charging and discharging as described above, a thickness of the lithium-ion battery was recorded.

Ten lithium-ion batteries were tested per group, and an average value was calculated for the cycling thickness swelling rates of the lithium-ion batteries. Cycling thickness swelling rate of a lithium-ion battery = (thickness of the lithium-ion battery after 200 cycles/thickness of the lithium-ion battery after the first cycle - 1) × 100%.

### 2. Preparation method

### 2.1 Preparation of positive electrode

A positive electrode active material lithium iron phosphate (LiFePO₄), conductive carbon black (Super P), and polyvinylidene fluoride (PVDF) were mixed at a weight ratio of 97.5:1.0:1.5, N-methylpyrrolidone (NMP) was added as a solvent to prepare a slurry with a solid content of 0.75, and the slurry was stirred to uniformity. The slurry was uniformly applied on a positive electrode current collector aluminum foil and dried at 90°C. Positive electrodes (14 mm) were obtained through cold pressing and cutting processes. A loading amount of the positive electrode was 1 mAh/cm².

### 2.2 Preparation of electrolyte

In an environment where a water content is less than 10 ppm (dry argon atmosphere), dioxolane (DOL) and dimethyl ether (DME) were mixed at a volume ratio of 1:1, and then a lithium salt LiN (SO₂CF₃)₂ was dissolved in the anhydrous solvent and mixed evenly to obtain an electrolyte with a lithium salt concentration of 1M.

### 2.3 Preparation of negative electrode

### Example 1

The electrospinning technology was used. Used as a precursor, polyvinylidene fluoride was dissolved in 8 mL of N,N-dimethylformamide and 2 mL of acetone, where a weight percentage of polyvinylidene fluoride in the mixture solution was 8%, the mixture was fully stirred for eight hours, and then the solution was transferred to a syringe for electrospinning. Parameters of electrospinning were as follows: the negative voltage was -4 kV, the positive voltage was 18 kV, the liquid feed rate was 0.3 mL/h, the distance between the collector plate and the needle head was 15 cm-20 cm, and the rotational speed of the collection roller was 2000 rpm. Polyvinylidene fluoride fibers prepared using electrospinning were placed in a vacuum drying oven at 80°C for 12 hours. A three-dimensional skeleton was formed using the polyvinylidene fluoride fibers, and a lithium metal film and the three-dimensional skeleton were sequentially pressed onto a copper foil current collector, where a porous layer was formed by cold pressing the three-dimensional skeleton. Finally, a negative electrode (18 mm) was directly obtained through punching and cutting. Measurement of negative electrode structure: the porous layer had a thickness of 50 µm and a porosity of 80%, a single-stranded fiber had a diameter ranging from 0.4 µm to 1 µm, the lithium metal film had a thickness of 20 µm, and β phase dominated the crystalline phase structure in the polyvinylidene fluoride fibers.

### Example 2

The preparation method in this example is substantially the same as that in Example 1, except that 1T pressure was applied in the cold pressing process such that the porous layer with a thickness of 30 µm and a porosity of 40% was obtained.

### Example 3

The preparation method in this example is substantially the same as that in Example 1, except the parameters of electrospinning: the negative voltage was -1 kV, the positive voltage was 8 kV, the liquid feed rate was 0.8 mL/h, the distance between the collector plate and the needle head was 12 cm, and the rotational speed of the collection roller was 100 rpm. Measurement of negative electrode structure: the porous layer had a thickness of 50 µm and a porosity of 80%, a single-stranded fiber had a diameter ranging from 0.4 µm to 1 µm, the lithium metal film had a thickness of 20 µm, and the proportion of β phase in the crystalline phase structure of the polyvinylidene fluoride fibers was lower than that in Example 1.

### Example 4

The preparation method in this example is substantially the same as that in Example 1, except that polymethyl methacrylate was used as the precursor and the parameters of electrospinning were as follows: the negative voltage was -4kV, the positive voltage was 12 kV, the liquid feed rate was 0.6 mL/h, the distance between the collector plate and the needle head was 15 cm-20 cm, and the rotational speed of the collection roller was 2000 rpm. A three-dimensional skeleton formed by polymethyl methacrylate fibers was used. Measurement of negative electrode structure: the porous layer had a thickness of 50 µm and a porosity of 80%, a single-stranded fiber had a diameter ranging from 0.4 µm to 1 µm, and the lithium metal film had a thickness of 20 µm.

### Example 5

The preparation method in this example is substantially the same as that in Example 1, except that: polyacrylonitrile was used as the precursor and dissolved in 10 mL of N,N-dimethylformamide, where a weight percentage of polyacrylonitrile in the mixture solution was 8%, and the parameters of electrospinning were as follows: the voltage was 12 kV, the liquid feed rate was 0.6 mL/h, the distance between the collector plate and the needle head was 15 cm, and the rotational speed of the collection roller was 2000 rpm. A three-dimensional skeleton formed by polyacrylonitrile fibers was used. Measurement of negative electrode structure: the porous layer had a thickness of 50 µm and a porosity of 80%, a single-stranded fiber had a diameter ranging from 0.4 µm to 1 µm, and the lithium metal film had a thickness of 20 µm.

### Example 6

The preparation method in this example is substantially the same as that in Example 1, except that the porous layer had a thickness of 300 µm.

### Example 7

The preparation method in this example is substantially the same as that in Example 1, except that the porous layer had a thickness of 500 µm.

### Example 8

The preparation method in this example is substantially the same as that in Example 1, except that the porous layer had a thickness of 200 µm.

### Comparative Example 1

A 20 µm lithium-copper composite strip was directly punched and cut into 18 mm, and used as the negative electrode plate.

### Comparative Example 2

A PP/PE/PP composite separator was used as the porous layer. The lithium metal film and the PP/PE/PP composite separator were sequentially pressed onto a copper foil current collector, and the negative electrode (18 mm) was directly obtained through punching and cutting. According to the structural measurement, the porous layer formed by the PP/PE/PP composite separator had a thickness of 20 µm and a porosity of 30% to 50%, and the lithium metal film had a thickness of 20 µm.

### Comparative Example 3

Polyvinylidene fluoride was dissolved in 10 mL of N-methylpyrrolidone, where a weight percentage of polyvinylidene fluoride in the mixture solution was 8%, the mixture was fully stirred for four hours, the slurry was applied on a copper foil current collector, and the coated electrode plate was placed in a vacuum drying oven at 80°C for 24 hours. Finally, the lithium metal film was pressed onto the negative electrode plate, and a negative electrode (18 mm) was directly obtained through punching and cutting.

### Comparative Example 4

The preparation method in this example is substantially the same as that in Example 1, except that: the polyvinylidene fluoride fibers were placed in a vacuum drying oven at 80°C for 12 hours, placed in a muffle furnace at 230°C for two hours, and placed in an 800°C tube furnace filled with high purity argon for six hours to obtain carbonized polyvinylidene fluoride fibers, and a three-dimensional skeleton formed by carbonized polyvinylidene fluoride fibers was used. Measurement of negative electrode structure: the porous layer had a thickness of 50 µm and a porosity of 80%, a single-stranded fiber had a diameter ranging from 0.4 µm to 1 µm, and the lithium metal film had a thickness of 20 µm.

### 2.4 Preparation of lithium-ion battery

A polyethylene film was used as the separator, where the polyethylene film had a thickness of 15 µm. The positive electrode, the separator, and the negative electrode in the foregoing examples were stacked in sequence, so that the separator was located between the positive electrode and the negative electrode for isolation. The stacked electrode assembly was put into an aluminum-plastic film package and dehydrated at 80°C. A dry electrode assembly was obtained. Then, the foregoing electrolyte was injected into the dry electrode assembly, and a button battery was assembled after vacuum packaging, standing, formation, shaping and other processes. The lithium-ion battery in the following examples and comparative examples was prepared.

Table 1 shows parameters of the negative electrodes in Examples 1-9 and Comparative Examples 1-3, as well as the structures for which the lithium metal deposition test, cycling performance test and cycling thickness swelling rate test are passed.

**Table 1**

| | Porous layer structure | Porosity | Skeleton thickness (µm) | Position of lithium metal deposition | Coulombic efficiency | Volume swelling |
|---|---|---|---|---|---|---|
| Example 1 | Three-dimensional skeleton made of polyvinylidene fluoride fiber | 80% | 50 | Inside skeleton | 99.7% | 15% |
| Example 2 | Three-dimensional skeleton made of polyvinylidene fluoride fiber | 30%-50% | 30 | Some inside skeleton and some lithium metal below skeleton | 98.7% | 60% |
| Example 3 | Three-dimensional skeleton made of polyvinylidene fluoride fiber (with β phase at low proportion) | 80% | 50 | Inside skeleton | 99.2% | 35% |
| Example 4 | Three-dimensional skeleton made of polymethyl methacrylate fiber | 80% | 50 | Inside skeleton | 97.6% | 85% |
| Example 5 | Three-dimensional skeleton made of polyacrylonitrile fiber | 80% | 50 | Inside skeleton | 98.3% | 40% |
| Example 6 | Three-dimensional skeleton made of polyvinylidene fluoride fiber | 80% | 300 | Inside skeleton | 99.64% | 15% |
| Example 7 | Three-dimensional skeleton made of polyvinylidene fluoride fiber | 80% | 500 | Inside skeleton | 99.61% | 15% |
| Example 8 | Three-dimensional skeleton made of polyvinylidene fluoride fiber | 80% | 200 | Inside skeleton | 99.68% | 15% |
| Comparative Example 1 | Lithium-copper composite strip | - | 30 | Upper surface of electrode plate | 95.7% | 200% |
| Comparative Example 2 | PP/PE/PP separator | 30%-50% | 20 | Below skeleton | 97.2% | 150% |
| Comparative Example 3 | Polyvinylidene fluoride separator | - | / | Upper surface of electrode plate | 97.7% | 100% |
| Comparative Example 4 | Three-dimensional skeleton made of carbonized polyvinylidene fluoride fiber | 80% | 50 | Some inside skeleton, and most on surface layer of skeleton | 96.5% | 50% |

As shown in the results, in this application, a negative electrode is provided with a porous layer containing a three-dimensional skeleton, which can effectively improve the cycling performance of the lithium-ion battery and effectively reduce the cycling swelling rate of the lithium-ion battery. Specifically, it can be learned through comparison between Example 1 and Comparative Example 1 that the negative electrode having a three-dimensional skeleton proposed in some embodiments of this application can greatly alleviate volume swelling of existing lithium-copper composite strips and improve the cycling stability, reducing the cycling swelling rate of lithium-ion batteries to 15%.

It can be learned from Example 1 and Comparative Examples 2 and 3 that due to the fiber structure of the three-dimensional skeleton, the porous layer according to some embodiments of this application has inter-fiber pores in proper size and distribution for accommodating lithium metal deposition. In contrast, the separators in Comparative Examples 2 and 3 have a certain porosity but cannot provide pores in a sufficient pore size, and therefore lithium metal fails to be deposited in pores of the separators.

It can be learned from Example 1 and Comparative Example 4 that the three-dimensional skeleton made of electrically insulating fibers can control the position and direction of lithium metal deposition. Lithium metal deposition is random in an electronically conductive three-dimensional skeleton, and is more likely to take place on a surface of the porous layer. The electrically insulating three-dimensional skeleton can better control the deposition position, thereby inhibiting volume swelling of the electrode plate and improving the cycling performance of a battery.

Effects of the porosity of the porous layer on lithium metal deposition can be learned from Example 1 and Example 2. When the porosity is greater than 70%, a majority of the cycled lithium metal can enter the porous layer, allowing the porous layer to better inhibit volume swelling of lithium metal and improving the electrochemical performance.

It can be learned from Example 1 and Example 3 that when the crystalline phase structure of a fiber material for the three-dimensional skeleton is improved to exhibit β phase, piezoelectric properties of the fiber structure can be optimized, and the cycling swelling rate of a lithium-ion battery can be more effectively controlled.

It can be learned from Example 1, Example 4, and Example 5 that three-dimensional skeletons made of different fiber materials will contribute to porous layers with different levels of stability. The three-dimensional skeleton made of polyvinylidene fluoride fiber is less likely to dissolve and swell in the electrolyte. Therefore, a three-dimensional structural morphology can be maintained properly, so that the porous layer has a satisfying cycling retention rate and good volume swelling performance.

As can be learned from the foregoing examples and comparative examples, the electrochemical apparatus of this application is provided with a porous layer containing a three-dimensional skeleton and the three-dimensional skeleton adopts an electrically insulating material. This can effectively alleviate lithium metal deposition on a surface of the negative electrode during charge-discharge cycles of an electrochemical apparatus, inhibit volume swelling of lithium metal, and retard the growth of lithium dendrites, thereby improving the cycling performance, capacity performance, and safety performance of the electrochemical apparatus.

In this specification, reference to "an embodiment", "some embodiments", "one embodiment", "another example", "an example", "a specific example", or "some examples" means that at least one embodiment or example in this application includes a specific feature, structure, material, or characteristic described in this embodiment or example. Therefore, descriptions in various places throughout this specification, such as "in some embodiments", "in the embodiments", "in an embodiment", "in another example", "in an example", "in a specified example", or "examples" do not necessarily refer to the same embodiment or example in this application. In addition, a specified feature, structure, material, or characteristic herein may be combined in any appropriate manner in one or more embodiments or examples.

Although illustrative embodiments have been demonstrated and described, persons skilled in the art should understand that the foregoing embodiments cannot be construed as limitations on this application, and that the embodiments may be changed, replaced, and modified without departing from the spirit, principle, and scope of this application.

## Claims

1. A negative electrode plate comprising:
a negative electrode current collector; and
a porous layer, wherein the porous layer is located on the negative electrode current collector, and the porous layer comprises a three-dimensional skeleton containing electrically insulating fibers.

2. The negative electrode plate according to claim 1, wherein the porous layer has a porosity of greater than or equal to 70%.

3. The negative electrode plate according to claim 1, wherein the fiber has a diameter of 50 nm to 10 µm.

4. The negative electrode plate according to claim 1, wherein the fibers in the three-dimensional skeleton interweave to form pores, and the pore has a size of 100 nm to 10 µm.

5. The negative electrode plate according to claim 1, wherein the fibers comprise ion conducting fibers.

6. The negative electrode plate according to claim 1, wherein the fiber has a hollow structure, and the hollow structure has a pore size of 10 nm to 500 nm.

7. The negative electrode plate according to claim 1, wherein a material of the fibers comprises one or more of a polymer material and an inorganic material, wherein the polymer material comprises one or more of the following constituents and derivatives thereof: polyvinylidene fluoride, polyimide, polyamide, polyacrylonitrile, polyethylene glycol, polyphenylene oxide, polypropylene carbonate, polymethyl methacrylate, polyethylene glycol terephthalate, polyethylene oxide, polyvinylidene fluoride-hexafluoropropylene, or polyvinylidene fluoride-chlorotrifluoroethylene, and the inorganic material comprises one or more of sodium silicate, aluminum oxide, or silicon oxide.

8. The negative electrode plate according to claim 1, wherein the fiber comprises a piezoelectric material.

9. The negative electrode plate according to claim 1, wherein the fiber comprises a fluoropolymer with a β phase.

10. The negative electrode plate according to claim 1, wherein the porous layer has a thickness of 30 µm to 500 µm.

11. The negative electrode plate according to claim 1, further comprising lithium metal, wherein the lithium metal is located inside the porous layer or between the porous layer and the current collector.

12. An electrochemical apparatus comprising:
a positive electrode plate;
a separator; and
the negative electrode plate according to any one of claims 1 to 11.

13. The electrochemical apparatus according to claim 12, wherein in a case that the electrochemical apparatus is fully charged, a thickness t of a lithium metal deposition portion is greater than or equal to at least 30% of a thickness T of the porous layer.

14. An electronic apparatus comprising the electrochemical apparatus according to claim 12 or 13.
